Europäisches Patentamt

European Patent Office

Office européen des brevets

(19)

(11) Publication number: **0 092 323**
**A1**

(12) **EUROPEAN PATENT APPLICATION**

(21) Application number: 83301703.1

(22) Date of filing: 25.03.83

(51) Int. Cl.³: **G 01 N 21/00, G 01 B 11/16**

(30) Priority: 25.03.82 GB 8208825

(43) Date of publication of application: 26.10.83
Bulletin 83/43

(84) Designated Contracting States: **AT BE CH DE FR GB IT LI LU NL SE**

(71) Applicant: **JOHNSON MATTHEY PUBLIC LIMITED COMPANY, 43 Hatton Garden, London, EC1N 8EE (GB)**

(72) Inventor: **Taylor, William Nicholas Howard, 3 The Lawn Harlow, Essex (GB)**
Inventor: **Barrell, John Douglas, 104 The Lindens Loughton, Essex (GB)**
Inventor: **Benedek, Robin Andras, 75 Woodstock Road Bedford Park, Chiswick, London, NW8 1EE (GB)**
Inventor: **Heywood, Alan Edward, 41 Gladeside St. Albans, Herts, AL4 9JA (GB)**
Inventor: **Fleet, Kenneth John, 39 Angus Drive Ruislip, Middlesex (GB)**
Inventor: **Smith, Alan Wilfred, 42 Arnos Grove Southgate, London, N.14 (GB)**
Inventor: **Potter, Richard Alan, 7 Cecile Park Crouch End, London, N.8 (GB)**

(74) Representative: **Arthur, Bryan Edward et al, Withers & Rogers 4 Dyer's Buildings Holborn, London EC1N 2JT (GB)**

(54) A bursting disc failure indicator.

(57) This invention relates to profile change sensors and is especially concerned with low energy profile change sensors. In more detail the profile sensor of the invention senses a change in the shape of a relative position or both of a least one surface (5), or a part thereof, of a body and comprises a source of energy, at least one signal conveying member (1, 8, 2) for establishing a signal path from a signal emitter (9) to a signal responsive member (10) with the signal conveying member (1, 8, 2) or a further member associated therewith so disposed in relation to at least a part of a surface (5) of a body that in the event of a change, greater than a given magnitude and in a given direction of the position or the shape of the said part of the body or both, occurrence of the change results in the interruption or establishment of a signal.

0092323

# IMPROVEMENTS IN OR RELATING TO PROFILE CHANGE SENSORS

This invention relates to profile change sensors and is especially concerned with low energy profile change sensors.

By a "profile change sensor" is meant means for sensing a change in the shape or relative position or both of at least one surface, or a part thereof, of a body.

By a "low energy profile change sensor" is meant a profile change sensor as above defined in which the energy dissipated in the sensor when in operation is such that the danger of any inflammable material in the neighbourhood of the sensor being ignited as a result of the operation of the sensor is small to non-existent. In such cases the inflammable material may comprise inflammable fluids (gases, liquids or vapours) either on their own or mixed with solid particles. Inflammable mixtures of fluids and solids in the neighbourhood of the body may also comprise inherently non-flammable fluids and inflammable solids or fluids and solids both of which are inherently non-flammable but which together form an inflammable mixture.

The invention is particularly, but not exclusively, concerned with means for detecting the failure of bursting discs. At least one embodiment of the invention may also be used for the detection of the creep of bursting discs and of the lifting and/or chattering of pressure relief valves. Bursting discs are also known, inter alia,

-2-

as "rupture discs", "safety discs" and "frangible discs".

A known way of detecting the creep of a conventional bursting disc, that is, one in which pressure is applied to the concave surface of the dome of the disc, is to shine a beam of light from one side to the other of the pipe in which the bursting disc is located, the light being arranged to fall on a slit in front of a photocell and the slit being so positioned that the ribbon of light passing through it just grazes or passes close to the topmost region of the convex surface of the dome of the disc.  If the disc creeps, then the light beam will be progressively interrupted and the signal from the photocell will change and this change can be made to operate an alarm or indicator system.

It is not normally necessary or even practicable to detect the creep of a "reverse"-type bursting disc, that is, one in which pressure is applied to the convex surface of the dome of the disc, because this is relatively small, but, in order to be able to detect both the failure of a reverse bursting disc and of a conventional bursting disc, it is necessary to arrange for the light beam to be interrupted by the dome, so that upon failure of the disc, the photocell is exposed to the light beam.

The disadvantages of arrangements of the type above described are that careful collimation of the beam is generally required as well as accurate setting up of the slit, especially for the purpose of creep detection.    Further, since only a proportion of the light energy in the beam will pass through the slit, a relatively high intensity light source will be required.    This will normally mean that a good deal of energy is dissipated at the light source with the consequent danger of inflammable material in the vicinity of the source being ignited, or the consequent need for special measures to be taken to prevent this.    Again, problems can arise as a result of the light being randomly reflected inside the pipe, rather in the manner of an integrating sphere, and then passing through the slit on to the photocell and producing spurious signals.    Still further, it would be possible for a conventional disc to burst or rupture in such a way that one or more flaps of dome material could obscure the slit and/or the light source and thus prevent light from the source from reaching the photocell so that the indicator or alarm system would not be triggered.    Another disadvantage is that different arrangements are required to detect on the one hand the creep of a conventional

disc and, on the other hand, the rupture or failure thereof.

Other methods of detecting dome creep and failure involve the use of strain gauges and of interferometric techniques.

These two methods can be highly accurate and are very suitable for use in the laboratory. They are now, hoever, well adapted for use in industrial installations.

As will readily be appreciated, these testing arrangements can also be used in the detection of the lifting and chattering of pressure relief valves.

The present invention aims to provide reliable means for detecting, inter alia, changes in the condition of bursting discs such as their creep and/or failure and changes in the condition of pressure relief valves such as their lifting and/or chattering in which the disadvantages of conventional arrangements, such as those described above, are obviated.

According to the present invention, a profile change sensor (as herein defined) comprises a source of energy, at least one signal conveying member for establishing a signal path from the source of energy to a signal responsive member with the signal conveying member or a further member associated therewith so disposed in relation to at least a part of a surface of a body that in the event of a change, greater than a given magnitude and in a given direction of the position or the shape of the said part of the body or both, occurrence of the change results in the interruption or the establishment of a signal.

The body is preferably a bursting disc or a pressure relief valve. If desired:-

(a)    at least a part of the or each signal-conveying member may be made from a flexible material;

(b)    at least a part of the or each signal-conveying member may be bonded to or may be in contact with, or slightly displaced from, the surface of the body or a part thereof;

(c)    at least one signal-conveying member may be suitable for conveying a low voltage electric current;

(d)    at least one signal-conveying member may be a light conveying means, for example,a light guide;

(e)    at least one signal-conveying member may be suitable for conveying sonic energy.

Preferably, in a profile change sensor according to the present invention, one or more light guides are employed.

The invention will now be described by way of example with reference to the accompanying drawings, in which:-

Figure 1 is a diagrammatic representation of a conventional bursting disc and an arrangement according to the invention showing light guides, a light source and a photosensitive device.

Figure 2 is a partially diagrammatic representation of a collar for holding the flange of a bursting disc, light guides

0092323

and a portable test unit;

Figure 3 is a diagrammatic representation of an arrangement according to the invention showing light guides and a reverse bursting disc;

Figure 4 is a second arrangement according to the invention in which light guides are located in a plane slightly displaced from the dome of a conventional bursting disc;

Figure 5 is a partial section of the arrangement of Figure 4 showing the disposition of the light guides in relation to the dome of the bursting disc;

Figure 6 indicates diagrammatically and in section the effect on the light guides of the failure, due to excess pressure, of the bursting disc of the arrangement of Figure 4.

Figure 7 illustrates diagrammatically a third arrangement according to the invention in which a further member comprising a scoop or umbrella is associated with light guides;

Figure 8 is a diagrammatic representation of the further member of Figure 7;

Figures 9 to 11 illustrate the effect on the further member of Figure 7 of a shock wave of fluid due, for example, to the failure of a bursting disc upstream from the member;

Figure 12 illustrates a fourth arrangement according to the invention in which a further member comprising a bell-mouthed open-ended tube is associated with light guides;

Figure 13 illustrates a fifth arrangement according to the invention in which the signal conveying member comprises a loop of brittle light guide material located within a pipe slightly downstream from a bursting disc;

Figure 14 is a detail of a modification of the loop of brittle light guide material illustrated in Figure 13, and

Figure 15 is a sixth arrangement according to the invention in which a further member associated with light guides comprises a hinged flap to which is secured a scoop or umbrella shaped member.

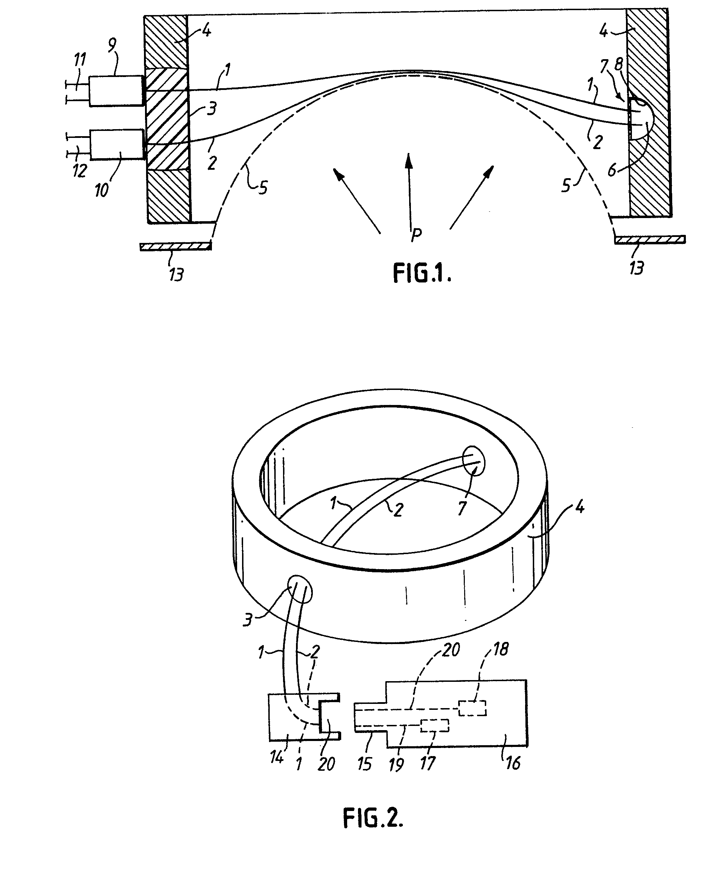

In Figure 1, light guides 1 and 2 are shown passing through pressure seal 3 in the wall of a collar 4, which constitutes the upper holder flange of a bursting disc assembly incorporating a conventional bursting disc. The light guides rest on the dome, represented by the broken line 5, of the bursting disc and at their opposite ends enter a cavity 6 in the wall of the collar 4 via small holes in a flexible diaphragm 7, secured across the entrance to the cavity. Preferably those portions of the light guides which rest on the dome and pass through the flexible diaphragm 7 are circumferentially coated with a  plastics material.

The cavity 6 is preferably substantially hemispherical in form and the curved wall 8 is preferably provided with a reflective coating. Preferably, the inner surface of the flexible diaphragm is also made reflective. In use, the light guides are pulled fairly taut across the dome of the bursting disc and the arrangement is such that any light passing down one light guide will emerge from the guide at the cavity 6 end and be reflected from the wall 8. Part of this light will enter the other light guide and be conveyed across the dome and through the seal 3.

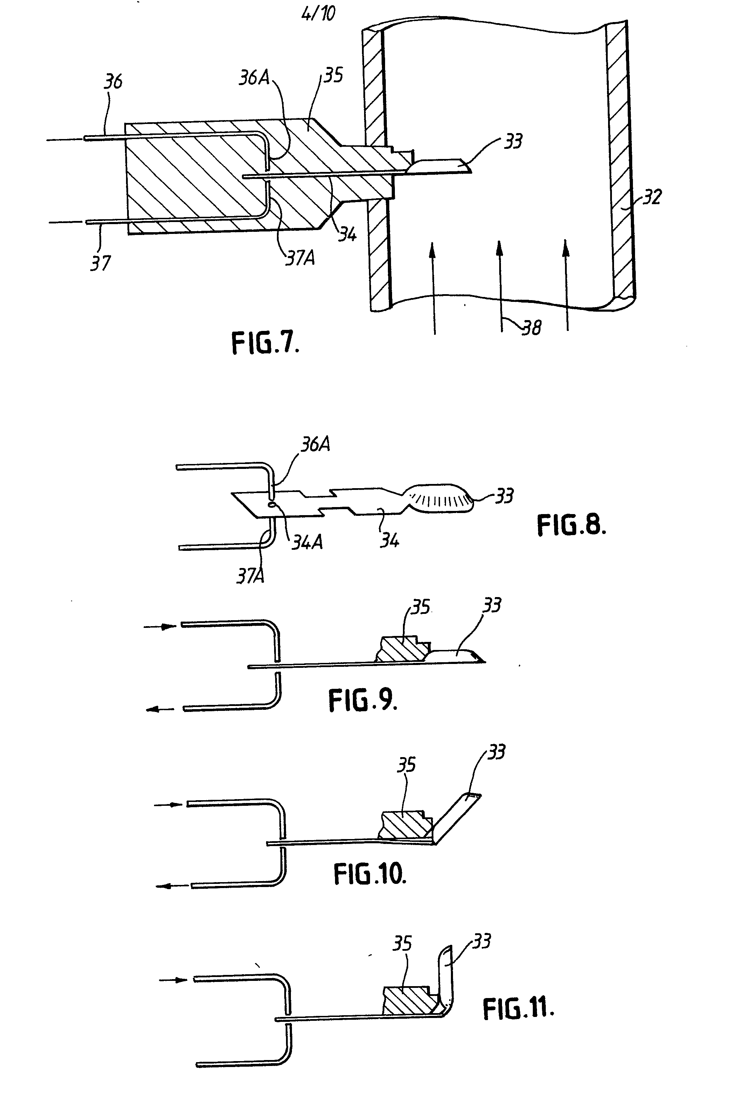

In Figure 1, 9 represents a light-emitting diode which is connected to a source of electrical energy via the wires 11 and which feeds light into the end of the light guide 1. Item 10, on the other hand, is a photo-responsive device which receives and responds to light which has emerged from the opposite end of light-guide 1, and then after reflection by the surface 8 of cavity 6 and the inner surface of diaphragm 7 has entered the other light guide 2 and passed thence along this light guide to its opposite end. When light leaves this end and falls on the photo-responsive device 10, this produces an output signal which may be conveyed along wires 12 to means wh..h will respond to a change
in this output signal.  Such a change might, for instance,
be made to activate an alarm or indicating device.

With the light guides in the positions shown in Figure
1, light produced by the LED 9 will impinge on the photo-
responsive  device 10 and may be made to hold off an alarm
or indicating device.  If the dome 5 were to creep as a
result of the pressure represented by the arrows P exerted
on its concave surface, one or both of the light guides 1,2
will eventually be pulled out of the diaphragm 7 and/or
one or both of them will be broken.    Any of these
events will have the effect of interrupting the light
path from LED 9 to photo-responsive device 10 and thereby
cutting off the supply of light to the photo-responsive
device 10 and, for example, cuasing an alarm or indicator
to be activated.

If the dome bursts, one or other of the light guides will be pulled out of the diaphragm 7 and/or broken much more rapidly than in the previous case but the result will be the same and an alarm or indicator may, for example, be activated.

The collar 4, which is not to scale, forms one of a pair of so-called "holder flanges" between which the flange or clamping face 13 of the bursting disc is clamped to form a bursting disc assembly. The two holder flanges are commonly held together and clamped on to the flange 13 of the bursting disc by means of so-called "Allen", "cap-head" or "socket" screws which pass through one holder flange into the other in a direction substantially parallel to their common axis of symmetry.

A part-diagrammatic view of the collar 4 is also given in Figure 2. Here the light guides 1 and 2 on emerging from the pressure seal 3 pass into an adaptor unit 14. This is designed to receive, inter alia, the mating portion 15 of a hand held, battery-powered test unit 16. This may comprise an LED 17 and a photo-sensitive device 18, each being connected via light guides 19 and 20 to mating portion 15 of unit 16. In use, portion 15 is plugged into the mating cavity 20 of unit 14 so that the ends of light guides 1 and 2 are in optical contact with the ends of light guides 19 and 20 respectively. LED 17 is then switched on and, if both of the light guides 1 and 2 are intact with their ends passing through diaphragm 7 as shown, light from the LED 17 will pass into the photo-responsive device via light guides 19, 1, 2 and 20 and the resulting output from the device 18 will be registered by some suitable indicating instrument (not shown) forming part of the unit 16. The indication of an output from device 18 then shows the operator that the light guides 1 and 2 are undisturbed and the bursting disc (5 in Figure 1) accordingly intact.

In place of the photo-responsive device 18 the end of the light guide may be presented to an eye-piece in the wall of unit 16. On viewing the end of the light guide through the eye-piece the operator will see the end of the light guide lit up if guides 1 and 2 are not disturbed sufficiently to pull one or the other out of diaphragm 7 and the end of the light guide dark if guides 1 and 2 are so disturbed and/or are broken.

In place of the arrangement shown in Figure 2, the light-guides 1, 2 on emerging from pressure seal 3 could be extended to a central control point where the state of the light guides 1, 2 within collar 4, and hence the condition of the bursting disc, could either be continuously monitored or checked regularly according to a preset programme and/or checked at will by means of a device of the type indicated at 16 in Figure 2.

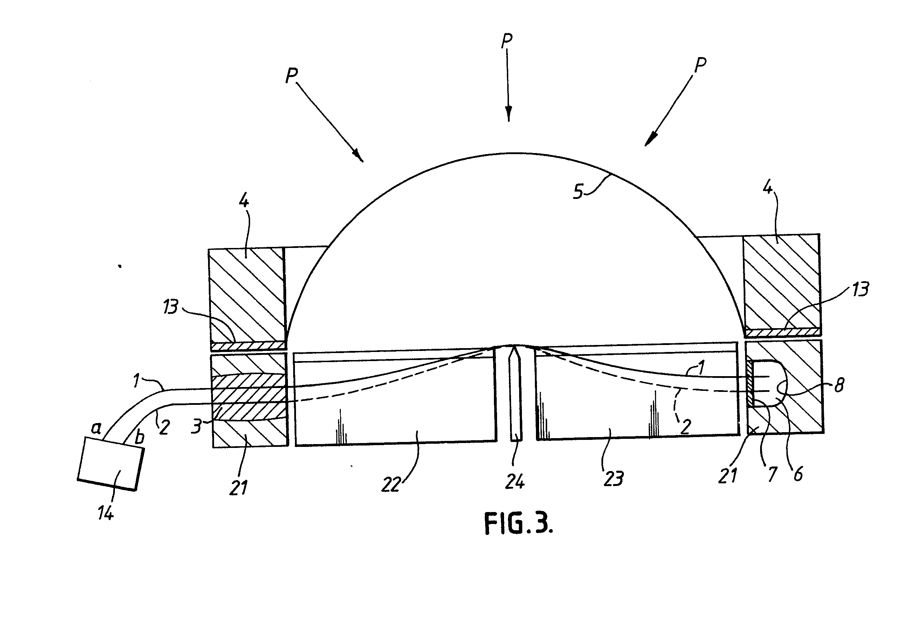

In Figure 3 the flange or clamping face 13 of a reverse bursting disc is shown clamped between collars or holding flanges 4 and 21. A bursting disc of this type is, in use, subjected to pressure on the convex surface of the dome 5 as shown by the arrows P. When this pressure exceeds the design pressure (or a value in the region thereof) the dome collapses inwardly on to a cruciform array of knives which cut the material of the disc into four sector-shaped pieces and thereby ensure an unhindered release of the pressure. Three of these knives are shown as items 22, 23 and 24 in Figure 3.

In a similar manner to flange 4 in Figures 1 and 2, flange 21 in Figure 3 is provided with a pressure seal 3 through which pass light guides 1 and 2 in a gas-tight manner. Within the collar 21 the guides 1, 2 pass, respectively, over the knife 24 and the knife (not shown) behind it which forms the fourth arm of the cross, the light guide 2 where it passes behind knives 22 and 23 being shown by the broken line. At their ends opposite to seal 3, the light guides pass through the flexible diaphragm 7 which is fitted across the opening of cavity 8.
As before, the walls of this cavity are reflective as is,
preferably, the inner surface of the diaphragm 7.

As previously indicated, when the pressure P applied to
the convex surface of the dome 5 exceeds the designed bursting
pressure of the bursting disc (or a value in the neighbourhood
thereof), the dome collapses inwardly on to the cruciform
array of knives indicated by items 22, 23 and 24 in Figure 3.
When this happens, one or other of the light guides 1 and 2
are pulled free of the diaphragm and/or are broken or cut on
knife blade 24 and/or the fourth knife blade (not shown) behind
it so that the continuity of the light path from point a, say,
at adaptor box 14 via light guides 1 and 2 to point b is
interrupted.

The bursting disc assembly shown in Figure 3 may be used
in essentially the same way as described with reference to
Figure 2, adaptor box 14 being provided with the same facilities
as adaptor box 14 in the arrangements shown in Figure 2.

The pressure tight seal 3 in the arrangements shown in
Figures 1, 2 and 3 may comprise a filling of plastics material
in a suitably shaped hole passing through the wall of the holder
flange 4 or 21, the two light guides passing through the
plastics material. Preferably, however, it is a threaded
plastics stopper which screws into a tapped hole in the wall of the holder flange and which may be provided with one or more O-ring seals to ensure that the joint is gas-tight. Such an arrangement has the advantage that a holder flange may easily be provided with a replacement unit comprising an adaptor and light guides when a disc has burst and the bursting disc assembly is being remade.

It is by no means essential for two light guides to be provided as shown in Figures 1, 2 and 3. Instead, only one such guide may be used. In this case, the light guide would, for example, pass through a holder flange wall via a seal such as 3 and then again pass through a flexible diaphragm covering the entrance to a chamber approximately diametrically opposed to the seal. The chamber in this case would be smaller than before and would be so arranged that the end of the light guide would come into optical contact with a further light guide passing through a gas-tight seal in the remainder of the wall of the holder flange to suitable means for detecting the emission of light from the end of this said further light guide. By "optical contact" both here and elsewhere in this specification is meant that the ends of the two light guides are so disposed in relation to each other, with or without an interposed zone of some plastics material, for example, of similar refractive index to the material of the light guides, that at least a proportion of any light emerging from the end of one light guide will enter the end of the other light guide. As before, the breaking and/or displacement of the light guide results in the optical path being interrupted and may provide an indication to the operator that a bursting disc has crept or failed.

Yet again, in the arrangements shown in Figures 1, 2 and 3, the two light guides may be replaced by a single light guide and pulse techniques used for determining the continuity or otherwise of the optical path. By this is meant that the light will be passed into the light guide in short pulses and the reception of the reflected light back along the light guide detected by sophisticated measuring techniques.

As will be appreciated, bursting discs are normally supplied in assemblies each comprising a disc and two holder flanges as shown in Figure 3. Such assemblies are normally clamped in a gas-tight manner between pipe flanges and provide positive and predictable relief of pressure in a vessel or pipe line when the pressure exceeds a predetermined value.

Although the invention has been described above with reference to the monitoring of the condition of bursting discs by means of light guides, it is by no means so limited. For example, other signal-conveying means could be used and also, both these and light guides could be used to provide a warning if, say, part of a pressure relieve valve should lift or begin to chatter or if part of a machine tool or some other equipment, such as an overhead crane, should move beyond a predetermined position. Further, the invention could be used as a burglar or intruder alarm to detect, for example, the opening of a door or the movement of a fence.

Yet again, the invention could be used to determine when fluid begins to flow along a pipe or when the rate of flow of such a fluid along a pipe increases. This could be done, for example, by replacing part of the pipe wall with a flexible diaphragm and using the methods of the invention to sense any disturbance, greater than a certain magnitude, of the diaphragm surface resulting from the fluid beginning to flow along the pipe or from an increase in its rate of flow along the pipe. Still further, two signal conveying members such as light guides might be stretched across the pipe in accordance with the methods of the invention, with a "body" comprising a web of some suitable material such as "FEP" (fluorinated ethylene propylene) between them. Any flow of fluid along the pipe at a velocity higher than a certain threshold value would then move the body so as to cause at least one signal conveying member to be disconnected and the associated signal path to be interrupted.

0092323

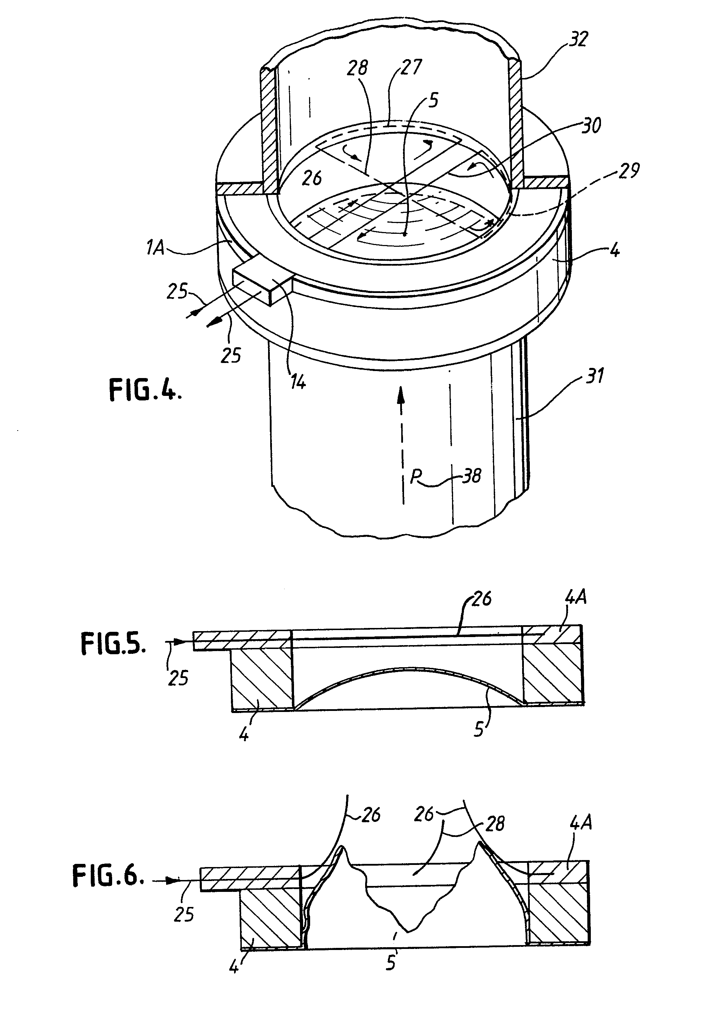

In Figures 4,5 and 6 similar parts to those of the arrangements of Figures 1, 2 and 3 have the same reference numbers. In
the arrangement of Figures 4,5 and 6 however a single continuous
light guide 25 passing in and out of the arrangement  through
adaptor box 14 replaces the two separate light guides 1 and 2
of Figures 1, 2 and 3 and follows a path defined by legs 26,
27, 28, 29 and 30. As seen from Figure 5, the light guide 25
legs 26, 28 and 30 are stretched tautly and substantially diametrically across a subsidiary annular holder 4A. The subsidiary
holder flange 4A is, as shown, seated on the holder flange 4
and, consequently, the legs 26, 28 and 30 of the light guide 25
are axially displaced a short distance away from the bursting
disc 5. It will be seen from Figure 4 that the legs 27 and 29
(shown dotted) follow the curvature of the bore of subsidiary
holder flange 4A and these legs may be secured to or embedded
in the flange 4A as desired. Figure  4 also shows the arrangement mounted between two flanged pipes 31 and 32.

The adaptor box 14 used in this arrangement may be provided
with the same facilities as the adaptor box 14 of Figure 2.
Alternatively, the adaptor 14 may be used to correct the two
ends of light guide 25 to a central control point where the state
of the limbs 26, 28 and 30 could be either continuously monitored or checked regularly according to a pre-set programme as previously described. Figure 7 shows a part of the pipe 32 in which an umbrella-like member 33 is mounted         of shock waves which would result from rupture of the bursting disc 5 not shown but disposed downstream of the umbrella member 33. The umbrella member 33 is carried by an arm 34 which has an aperture 34A and which is= slidably mounted within a housing 35. The housing is, in turn, supported on the wall of pipe 32. Two light guides 36 (input) 37 (output) are located in the housing 35 as shown and, depending upon the position of the arm 34, the aperture 34A will or will not be in alignment with arms 36A, 37A of the light guides 36 and 37 respectively. When the arms 36A, 37A are in alignment with the aperture 34A light may pass from arm 36A to 37A through the apertures 34A (see Figure 8). In a position of non-alignment, light cannot pass between the two light guides 36 and 37.

    Figures 7,8 and 9 show the arrangement with the umbrella member 33 in an "undisturbed" position so light can pass from arm 36A to arm 37A unhindered. When the bursting disc 5 (not shown) is ruptured, a shock wave passes along the pipe 32 in the direction of the arrows 38 and impinges on the umbrella-member 33 causing the same to pivot as shown in Figures 10 and 11. Such pivot movement of the umbrella member 33 causes the arm 34 to move to the right in Figure so that the aperture 34A is displaced out of alignment with the arms 36A, 37A. The result is that light is prevented from travelling from arm 36A into 37A and any light signal previously transmitted between is interrupted indicating pivotal displacement of the umbrella member 33 consequent upon the rupture of the bursting disc 5. As in the previous arrangements the interruption of the light signal can be made to actuate an alarm signal. Alternatively, the arrangement may operate so that in the rest position light is prevented from travelling from arm 36A to arm 37A since the aperture 34A is out of alignment with these two arms. Upon pivotal displacement of the umbrella member 33, however, the aperture (elongated if necessary) is brought into alignment with the said arms permitting light to pass therebetween.

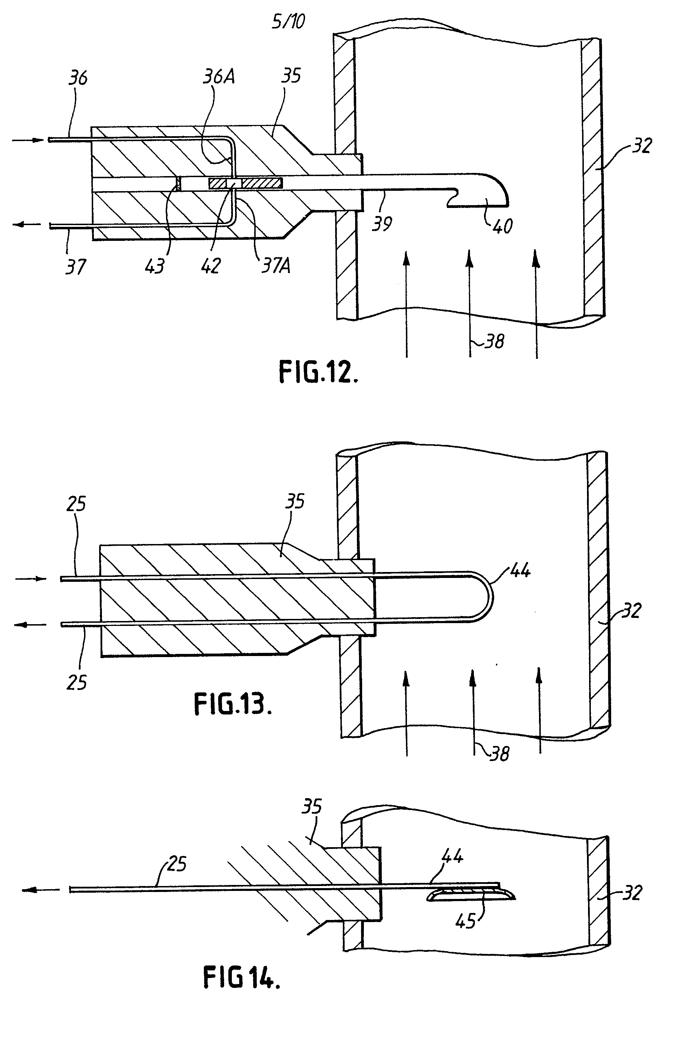

Figure 12 is a modification of the arrangement of Figures 7 to 11 in which the arm 34 is replaced by a tubular member 39 with a bell-mouthed end 40 disposed towards the bursting disc 5 (not shown). As piston-like plug 41 having an aperture 42 is displaceable within the tube 39. In the event of a shock wave represented by arrows 38 (upon rupture of a bursting dics 5) impinging on the bell-mouthed end 40 of the tube 39, the piston-like plug 41 is displaced to the left in the Figure and movement is restrained by a perforated or other stop 43. In this restrainer position, the aperture 42 is displaced out of alignment with arms 36A, 37A of the light guides 36 and 37 so that any signal between these arms is interrupted. Alternatively, the aperture 42 maybe brought into alignment with the said arms when the piston 41 is in the displaced and restrained position thereby permitting a signal to pass between arms 36A and 37A.

In the arrangement of Figure 13, a single and continuous light guide is mounted in the housing 35 and extends into the pipe 32 at 44. At least that part 44 of the light guide is brittle so that impingment thereon by a shock wave 38 or a portion of a ruptured bursting disc causes fracture thereof and the interruption of a light signal along the guide 25. Preferably, the arrangement of Figure 13 is turned through 90° so that the arms or part 44 are located in a plane at right angles to the plane of the Figure as shown in Figure 14. Figure 14 shows a modification of Figure 13 in which an umbrella member 45 is secured to the arms 44. Alternatively the umbrella member 45 may be replaced by one or more turns of a strip of plastics or other material wound around the legs of part 44.

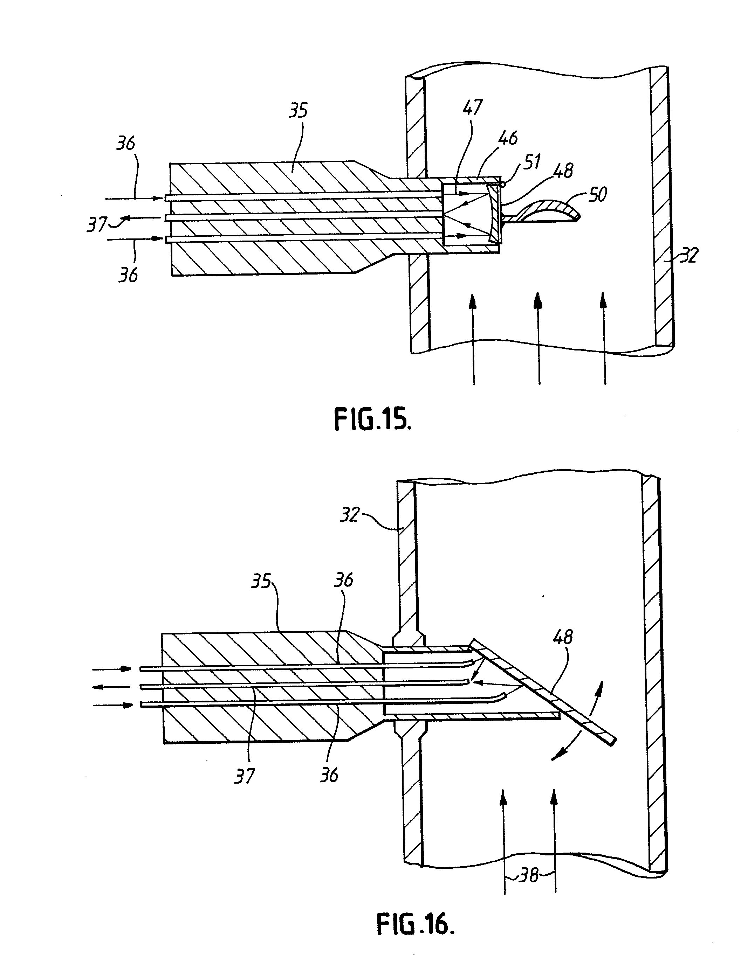

Figure 15 shows yet a further arrangement according to the invention in which the housing 35 is generally cylindrical having a tubular end 46 defining a cylindrical cavity 47. A disc 48 is pivotally mounted to close the cavity 47 and on one face thereof causes a concave reflecting body 49 and on the other face an umbrella member 50. In the undisturbed position of the disc 48, an
annular array of input light guides 36 conveys light to the
reflecting body 49 from whence the light is focussed onto a central
outlet light guide 37.

When a shock wave indicated by the arrows 38 impinges on the
umbrella member 50, the disc 48 is pivotally displaced about pivot
51 thereby interrupting the passage of light from the array of
light guides 36 to the central light guide 37.

The underlying principle of a displaceable reflecting body such
as the disc 48 of Figure 15 represents a feature of the present
invention and may be realised in a number of different ways of
which the arrangement of Figure 15 represents only one. For
example, the arrangement of Figure 15 may be modified so that the
right hand ends of the light guides terminate in a plane which is
inclined relatively to the axis of the pipe 32. A flat reflecting
body is disposed in a plane parallel to the plane containing the
ends of the light guides so that it reflects input light signals
into one or more output light guides. A portion of the flat
reflecting body extends into the path of a shock wave represented by
arrows 38 so that upon the rupture of a bursting disc, the flat
reflecting body is displaced so that signals are interrupted. This
underlying principle is shown in Figure 16.

The light guides referred to in all of the foregoing may take the form of optical fibres. Alternatively, sonic signals may be passed through or along sonic energy conveying members or, yet again, low voltage electrical signals may be passed along electric conducting members.

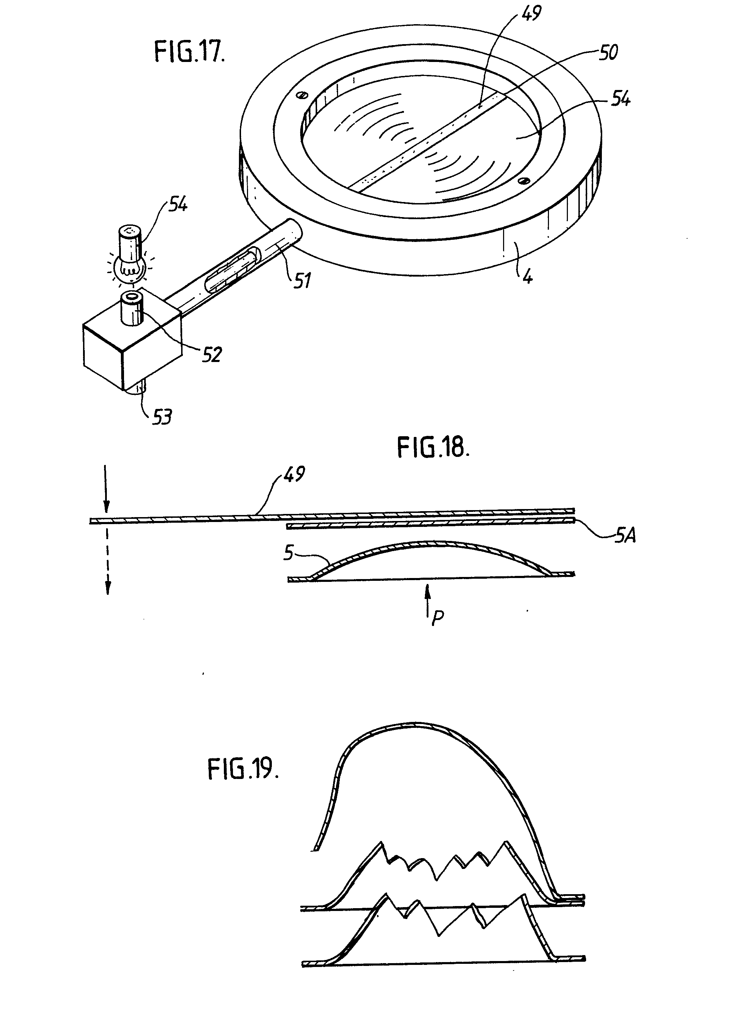

Additional embodiments of a profile change sensor and ancillary equipment in accordance with the present invention are shown in Figures 17, 18, 19, 20 and 21.   If desired the profile change sensor with form of a bursting disc unit shown in Figures 17 to 20 is a secondary unit and is dispersed upstream of a primary or main bursting disc unit.   In such an arrangment,  the bursting disc of the secondary unit is substantially flat.  The bursting disc of the secondary unit is preferably made from a material weaker than that of the main bursting disc and preferably ruptures at a pressure 5% lower than the diagonal rupturing pressure of the main bursting disc.

The profile change sensor, whether associated with a primary bursting disc and or a secondary bursting disc unit comprises a flexible strip 49 of material which permits the passage therethrough of electromagnetic radiation within a predetermined wavelength band. Preferably, the said strip is disposed diametrically across the bursting disc (primary or secondary) and is clamped at one end 50 (Figure 17) whilst the other end passed freely through holder 4 into a tube 51 and thence between apertures 52/53 so as to be interposed in a beam of light passing from a light source 54 through the the apertures 52/52 to a sensor (not shown). Thus the wave length distribution of the electron magnetic energy reaching the sensor is changed. For example, the flexible strip 49 may be a strip of "Kapton" polyimide film which has a translucent amber colour.

Figure 18 shows the main bursting disc 5, the secondary bursting disc 5A and the flexible strip 49. When the main disc 5 ruptures, the secondary disc 5A ruptures shortly thereafter, the flexible strip 49 is pulled out of the path of the beam from the light source 54 and the light energy from aperture 53 is no longer filtered by the polyimide strip 49 as indicated in Figure 19. This change in the light energy impinging on the sensor (not shown) occurs upon the rupture of the main and secondary bursting discs.

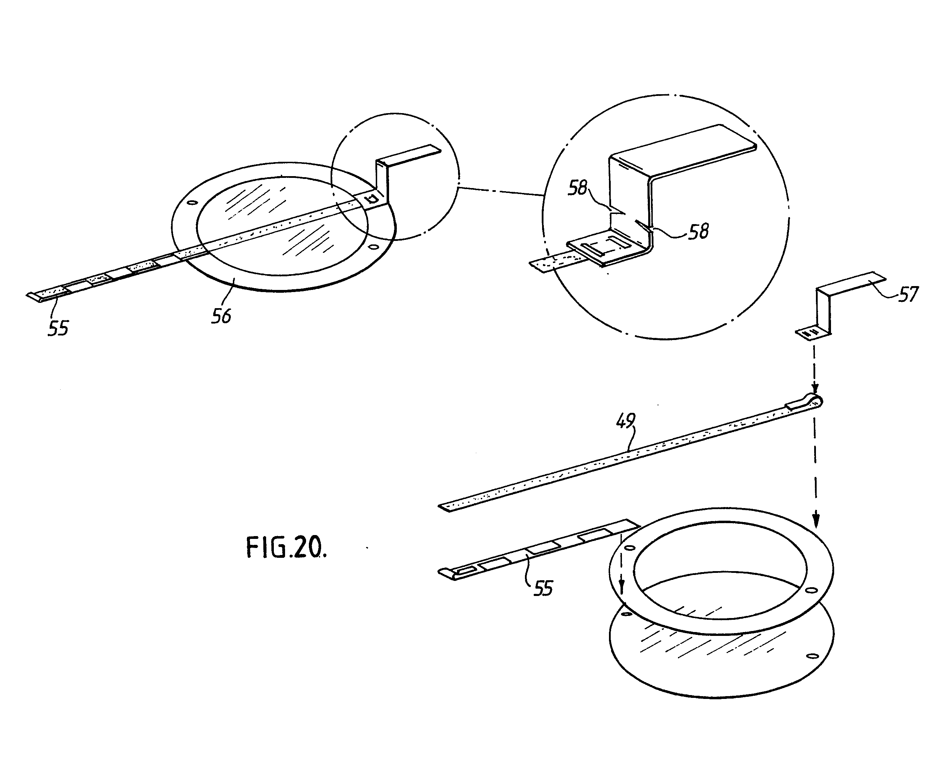

Figure 20 shows an arrangement of how the strip 44 may be supported on a guide arm 55 and diametrically across a carrier ring 56. When the carrier ring 56 and the secondary disc 5A are clamped between conventional clamping collars, a handle 57 is removed by twisting which results in fracture across cut-outs 58.

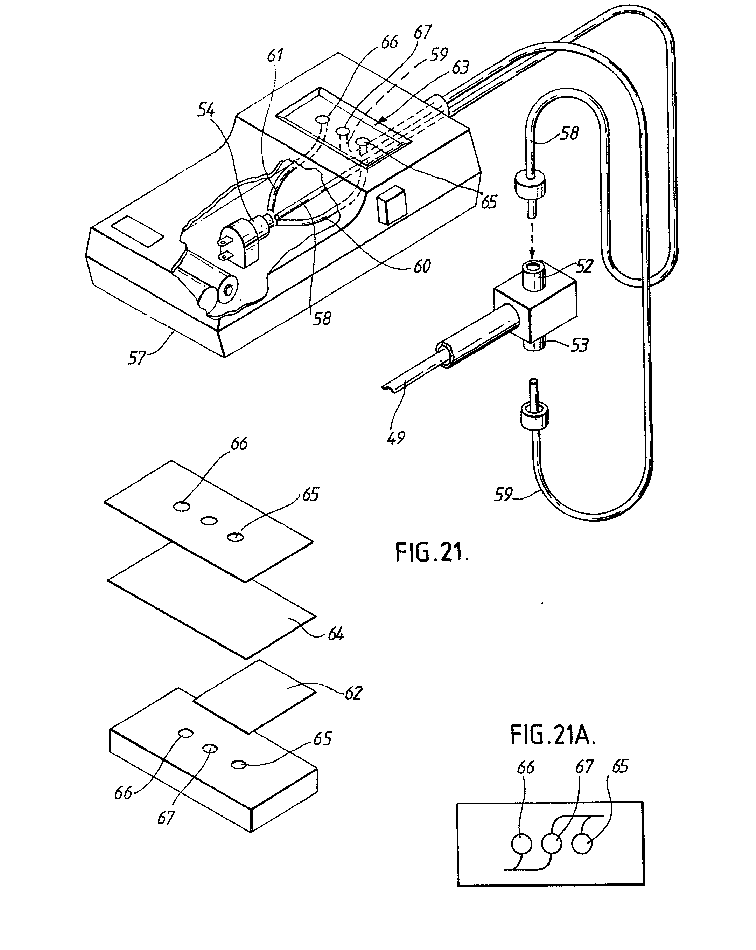

Figure 21, the sensor not shown in Figures 17 -20 is dissipated generally at 57. In practice, light from a light source 54 passes along flexible light guide 58 via tube 52, strip 49, and emerges from tube 53 and thence passes along light guide 59. Light from the source 54 also passes along light guides 60 and 61. Light emerging from light guide 60 passes through an orange filter 62 in a panel 63 and thence through a blue filter 64 so as to give a green light through aperture 65 on the panel 63. Light from aperture 65 is a reference green light. Light from source 54 also passes along light guide 61 through filter 64 and blue light is therefore visible in aperture 66. This is the blue reference light.

When the amber polyimide strip 49 is interposed on the beam between the apertures 52,53 amber light passes along the light guide 59 and thence through blue filter 64 so that a green light is visible through aperture 67.

If therefore follows, that the underdistrubed condition of the pull-out strip 49 (and, also of the bursting disc with which it is associated) as indicated by a green light (formed from the light passing through the amber strip 49 and the blue filter 64) is visible in aperture 67.

When the pull-out strip 44 is removed from the light beam passing through apertures 52 and 53, the light passing along light guide 59 then only passes through blue filter 64 and a blue light is visible in aperture 67.    Blue light in aperture 67 corresponds to the disturbed condition of the strip 49 and the burst condition of the disc with which it is associated.

As indicated in Figure 21A, with the disc intact, green light is visible in apertures 65 and 67.

When the disc is burst, blue light is visible in apertures 66 and 67.   As will be appreciated the green and blue light visible in apertures 65 and 66 is provided to enable the operator reading to identify the light visible in aperture 67 as green (disc intact) or blue (disc ruptured).

High efficiency, lower power fibre optic systems operate in the infra red region with a wave length of about 900 $N_m$ .   Thus, for remote monitoring applications, infra red is to be preferred to the visible light used with the fibre optic system described with reference to Figure 21.

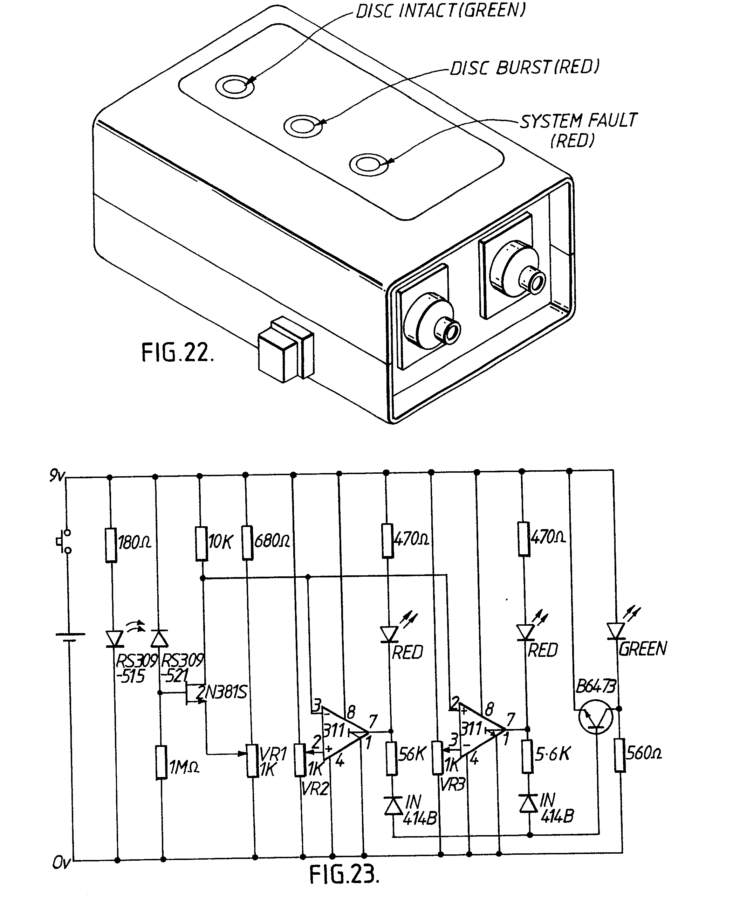

The Kapton film 49, may be made translucent to infra red radiation by sand blasting to produce a matt surface.   Such a modification makes electronic discrimination between the disc intact and disc ruptured states relatively simple.   A battery powered remote unit is indicated in Figure 22 and the associated circuitry in Figure 23.

CLAIMS

1.    A profile change sensor for sensing a change in the shape or relative position or both of at lesst one surface, or a part thereof, of a body, the sensor comprising a source of energy, at least one signal conveying member for establishing a signal path from the source of energy to a signal responsive member with the signal conveying member or a further member associates therewith so disposed in relation to at least a part of a surface of a body that in the event of a change, greater than a given magnitude and in a given direction of the position or the shape of the said part of the body or both, occurrence of the change results in the interruption or establishment of a signal.

2.    A sensor according to Claim 1 wherein the body is a bursting disc.

3.    A sensor according to Claim 2 wherein the bursting disc includes a domed region.

4.    A sensor according to Claim 1 wherein the body is a pressure relief valve.

5.    A sensor according to Claim 1 wherein at least a part of the or each signal-conveying member is made from a flexible material.

6.    A sensor according to Claim 1 or Claim 5 wherein at least a part of the or each signal conveying member is bonded to or in contact with the surface of the body or part thereof.

7.  A sensor according to Claim 1 or Claim 5 wherein at least a part of the or each signal conveying member is slightly displaced from the surface of the body or a part thereof.

8.  A sensor according to any preceding claim wherein at least one signal-conveying member is a conductor for conveying a low voltage electric current.

9.  A sensor according to anyone of Claims 1 to 7 wherein at least one. signal-conveying member is a light conveying means.

10.  A sensor according to Claim 9 wherein the light conveying means is a light-guide and the sensor includes a light source and a photo sensitive device.

11.  A sensor according to anyone of Claims 1 to 7 wherein at least one signal-conveying member is capable of conveying sonic energy.

12.  A sensor according to anyone of Claims 1,2,3 and 6 to 11 wherein the signal-conveying member comprises at least two arms which are disposed in substantially the same or parallel planes with the said plane or planes disposed normally to the axis of symmetry of the domed region of the bursting disc.

13.  A sensor according to Claim 1 or Claim 2 wherein the said further member includes an arm which is slidable within a housing to interrupt the signal path or permit establishment of the signal path, and a displaceable catchment member associated with the arm so that displacement of the catchment member creates sliding movement of the arm to interrupt or permit establishment of the signal path.

14.   A sensor according to Claim 13 wherein the catchment member has an umbrella-like shape and is mounted for angular displacement.

15.   A sensor according to Claim 1 or Claim 2 wherein the said further member is tubular having an open bell-mouthed end disposed in the region of the bursting disc, a piston slidable within the tubular member to interrupt the signal path or permit establishment of the signal path.

16.   A sensor according to Claims 1,2,3 and 10 including at least one input light guide for conveying input signals and at least one output light guide for conveying output signals and an angularly displaceable reflecting body which in one angular position reflects input signals emerging from the input light guides to the output light guides to establish a signal path and which in another angular position reflects the input signals so that they do not impinge upon the output light guides thereby interrupting the signa path.

17.   A sensor according to Claims 1,2,3 and 10 wherein the light guides are brittle so that in the event that the light guides are subject to a force above a certain magnitude, the guides fracture thereby interrupting the signal path.

18.    A profile change sensor according to anyone of claims
1 to 11 wherein the signal conveying member comprises two
arms having corresponding ends thereof displaced from and in
alignment with each other and capable of transmitting electromagnetic energy, a further and flexible member associated with
the body and so disposed in relation to at least a part of
the surface of the body that in the event of a change greater
than a given magnitude and in a given direction of the position
or shape of the said part of the body, or both, occurrence
of the clamp results in the flexible member being at least
partially withdrawn from between the corresponding ends of the
arms of the signal conveying member so that results a change
in the energy distribution in the electromagnetic energy along
one of the said arms away from the appropriate end.

19.    A profile change sensor according to claim 18 wherein the
body is a bursting disc.

20.    A profile change sensor according to claim 18 or claim 19
wherein the body is a secondary bursting disc located downstream
of and close to a main bursting disc.

21. A profile change sensor wherein the electromagnetic energy fed to the opposed ends is white light.

22. A profile change sensor wherein the electromagnetic energy fed to the opposer ends is infra-red light.

23. A profile change sensor according to claims 18, 19 or 20 wherein the flexible member is made from a translucent and amber coloured plastics material.

1 /10

**FIG.1.**

**FIG.2.**

FIG.3.

0092323

**FIG.4.**

**FIG.5.**

**FIG.6.**

0092323

FIG.7.

FIG.8.

FIG.9.

FIG.10.

FIG.11.

0092323

/10

FIG.12.

FIG.13.

FIG 14.

FIG.15.

FIG.16.

FIG.17.

49

50

54

54

51

52

53

4

FIG.18.

49

5A

5

P

FIG.19.

0092323

57

58

58

49

55

56

55

FIG.20.

0092323

FIG.21.

FIG.21A.

10/10

DISC INTACT (GREEN)

DISC BURST (RED)

SYSTEM FAULT
(RED)

FIG.22.

FIG.23.

European Patent Office

**EUROPEAN SEARCH REPORT**

| | DOCUMENTS CONSIDERED TO BE RELEVANT | | EP 83301703.1 |

| Category | Citation of document with indication, where appropriate, of relevant passages | Relevant to claim | CLASSIFICATION OF THE APPLICATION (Int. Cl. ³) |
|---|---|---|---|
| A | GB - A - 1 033 568 (ELECTRONIC ASSIST.)<br>* Claims 1-7; fig. 1-4 * | 1,8 | G 01 N 21/00<br>G 01 B 11/16 |
| A | GB - A - 2 029 019 (BRITISH AEROSPACE)<br>* Totality * | 1,5 | |
| A | US - A - 2 713 624 (WILLIAM KAGAN)<br>* Column 1, lines 19-24; fig. 1-5 * | 1,8 | |
| A | DE - A - 1 566 685 (COLLUM)<br>* Claims 1-10; fig. 1-3 * | 1,8 | |
| A | DE - B2 - 2 345 309 (KRAFTWERK UNION)<br>* Totality * | 1,5 | TECHNICAL FIELDS SEARCHED (Int. Cl. ³)<br><br>G 01 B 7/00<br>G 01 B 11/00<br>G 08 B 17/00 |
| A | DE - B1 - 2 937 824 (FELTEN)<br>* Totality * | 1 | G 01 N 21/00<br>G 01 N 27/00<br>G 01 N 29/00 |
| A | DE - A1 - 3 015 391 (FELTEN)<br>* Page 6, line 26 - page 8, line 13; fig. 1-4 * | 1,5 | G 07 C 11/00 |

The present search report has been drawn up for all claims

| Place of search | Date of completion of the search | Examiner |
|---|---|---|
| VIENNA | 06-06-1983 | ERBER |